# EUROPEAN PATENT SPECIFICATION

(11) **EP 4 468 131 B1**
(45) Date of publication and mention of the grant of the patent: **08.07.2026**
(21) Application number: 23870010.8
(22) Date of filing: 11.08.2023
(51) Int. Cl.: G06F 3/048, G06F 9/445, G06F 3/0488

(54) **EMBEDDED WINDOW DISPLAY METHOD AND APPARATUS, ELECTRONIC DEVICE, AND READABLE STORAGE MEDIUM**
VERFAHREN UND VORRICHTUNG ZUR ANZEIGE EINGEBETTETER FENSTER, ELEKTRONISCHE VORRICHTUNG UND LESBARES SPEICHERMEDIUM
PROCÉDÉ ET APPAREIL D'AFFICHAGE DE FENÊTRE INTÉGRÉE, DISPOSITIF ÉLECTRONIQUE ET SUPPORT DE STOCKAGE LISIBLE

(30) Priority: 29.09.2022 CN 202211203385
(43) Date of publication of application: 27.11.2024
(73) Proprietor: Honor Device Co., Ltd., Shenzhen, Guangdong 518040 (CN)
(72) Inventor: XU, Xiaoding, Shenzhen, Guangdong 518040 (CN); SUN, Qi, Shenzhen, Guangdong 518040 (CN)
(74) Representative: Goddar, Heinz J.
(86) International application number: PCT/CN2023/112680
(87) International publication number: WO 2024/066764

(56) References cited:
- EP-A1- 4 210 310
- CN-A- 104 142 758
- CN-A- 109 086 095
- CN-A- 109 947 342
- CN-A- 110 058 777
- CN-A- 113 835 569
- CN-A- 114 363 462
- US-A1- 2022 253 144
- US-B1- 6 683 629

## Description

This application claims priority to Chinese Patent CN117827044A entitled "EMBEDDED WINDOW DISPLAY METHOD AND APPARATUS, ELECTRONIC DEVICE, AND READABLE STORAGE MEDIUM".

### TECHNICAL FIELD

This application relates to the field of electronic device technologies, and in particular, to an embedded window display method and apparatus, an electronic device, and a readable storage medium.

### BACKGROUND

Nowadays, electronic devices have more functions and richer applications. When a user currently uses a high-frequency shortcut service such as scanning or payment code, the user needs to perform unlocking, then open an application, and then select a corresponding service, causing complex operations. For example, when the user is in a turned-off screen or a lock screen, or uses an application such as online conference or video, the user also needs to perform multiple operations to call up the corresponding service, causing inconvenience of use for the user.

CN 114363462 A discloses an interface display method, which is characterized by comprising the following steps that: electronic equipment displays a first page of a first application in a full-screen manner; the electronic equipment receives a first operation for the first page, and in response to the first operation, the electronic equipment displays the first page in a window form in a first area of a display screen, displays a second page of a second application in a window form in a second area of the display screen, and displays a first control in a third area of the display screen, the first control is associated with a third page of the first application; when the electronic equipment receives a fourth operation for the first control, the electronic equipment displays a third page in a full-screen mode in response to the fourth operation, and the third page is different from the first page. According to the embodiment of the disclosure, when the electronic equipment accesses the first page, the multi-task interface can be entered through the first operation, and the third page is displayed by clicking the first control in the multi-task interface. In this way, the third page can be quickly accessed from the first page, and the access efficiency is improved.

CN 110058777 A discloses a shortcut function starting method and electronic equipment, and the method comprises the steps: collecting an air gesture of a user through a camera of the electronic equipment, and recognizing the air gesture of the user; obtaining the face features of the user, and verifying whether the obtained face features are face features input or stored by the user or not. When theface verification of the user is passed and the air gesture is a preset air gesture for starting a certain application or a certain shortcut function, starting the application or the function quickly. The application or the function is quickly started in a mode of combining the air gesture recognition and the face verification, the operation can be simplified, meanwhile, the mistaken touch problem is avoided, and the user experience is improved.

### SUMMARY

This application provides an embedded window display method and apparatus, an electronic device, and a readable storage medium, to avoid complex operations of a user in opening an application, and improve convenience of use.

According to a first aspect, this application provides an embedded window display method, including:
when detecting a preset operation instruction, starting an embedded window in a currently displayed parent window based on the preset operation instruction;
displaying an embedded window application corresponding to the preset operation instruction in the embedded window, where the embedded window and the parent window are at a same layer or adjacent layers, and an application displayed in the embedded window is associated with the parent window; and
performing, when receiving an operation instruction of the embedded window application, an interaction operation based on the operation instruction of the embedded window application, characterized by determining whether a foreground focus window is the embedded window, canceling a foreground processing tag associated with a to-be-processed event and redirecting the to-be-processed event to the parent window for processing when determined that the foreground focus window is the embedded window.

In the embedded window display method provided in this application, when the preset operation instruction is detected, the embedded window is started in the currently displayed parent window based on the preset operation instruction; the embedded window application corresponding to the preset operation instruction is displayed in the embedded window, where the embedded window and the parent window are at the same layer or the adjacent layers, and the application displayed in the embedded window is associated with the parent window; and when the operation instruction of the embedded window application is received, the interaction operation is performed based on the operation instruction of the embedded window application. Therefore, the corresponding application is opened through the embedded window, a one-key operation is achieved, the operation is more convenient, and this application can be used for any application without requiring special adaptation.

In a possible implementation, the starting an embedded window in a currently displayed parent window based on the preset operation instruction includes:
drawing a parent window based on the preset operation instruction; and
starting the embedded window in the drawn parent window.

In a possible implementation, the drawing a parent window based on the preset operation instruction includes:
obtaining a window size of a to-be-drawn parent window and placeholder information of an embedded window in the to-be-drawn parent window; and
performing window drawing and layer composition based on the window size of the to-be-drawn parent window and the placeholder information of the embedded window, to obtain the drawn parent window.

In a possible implementation, the starting an embedded window in a currently displayed parent window based on the preset operation instruction includes:
obtaining a target window, a window mode, window dimensions of the embedded window, a mark bit of the embedded window, a stack mode of the embedded window, and a touch mode of the embedded window; and
drawing the embedded window based on the target window, the window mode, the window dimensions of the embedded window, the mark bit of the embedded window, the stack mode of the embedded window, and the touch mode of the embedded window, to obtain the embedded window.

In a possible implementation, after the drawing the embedded window based on the target window, the window mode, the window dimensions of the embedded window, the mark bit of the embedded window, the stack mode of the embedded window, and the touch mode of the embedded window, the method further includes:
when completing creation of the stack mode of the embedded window, handing over stack control to a host process corresponding to the parent window.

In a possible implementation, the displaying an embedded window application corresponding to the preset operation instruction in the embedded window includes:
during drawing of the embedded window, obtaining a window size of an application corresponding to the preset operation instruction and configured window dimensions of the embedded window; determining a display area of the application corresponding to the preset operation instruction based on the window size and the configured window dimensions of the embedded window; and
displaying the application corresponding to the preset operation instruction based on the display area.

In a possible implementation, after the displaying an embedded window application corresponding to the preset operation instruction in the embedded window, the method further includes:
obtaining a preset synchronization event; and
adjusting a display position of the embedded window based on the preset synchronization event.

In a possible implementation, the performing, when receiving an operation instruction of the embedded window application, an interaction operation based on the operation instruction of the embedded window application includes:
performing interface switching based on the operation instruction of the embedded window application when receiving the operation instruction of the embedded window application.

In a possible implementation, after the performing, when receiving an operation instruction of the embedded window application, an interaction operation based on the operation instruction of the embedded window application, the method further includes:
obtaining an exit instruction, and returning to a target interface based on the exit instruction.

In a possible implementation, the obtaining an exit instruction, and returning to a target interface based on the exit instruction includes:
removing an embedded task stack based on the exit instruction, and returning to the target interface.

According to a second aspect, this application provides an embedded window display apparatus, including:
a starting module, configured to: when a preset operation instruction is detected, start an embedded window in a currently displayed parent window based on the preset operation instruction;
a display module, configured to display an embedded window application corresponding to the preset operation instruction in the embedded window, where the embedded window and the parent window are at a same layer or adjacent layers, and an application displayed in the embedded window is associated with the parent window; and
an operation module, configured to perform, when an operation instruction of the embedded window application is received, an interaction operation based on the operation instruction of the embedded window application, characterized in that the operation module is further configured to determine whether a foreground focus window is the embedded window, cancel a foreground processing tag associated with a to-be-processed event and redirect the to-be-processed event to the parent window for processing when determined that the foreground focus window is the embedded window.

According to a third aspect, this application provides a computer-readable storage medium, having a computer program stored therein, where the computer program, when executed by a processor, causes the processor to perform the embedded window display method according to any one of the foregoing first aspect or the possible implementations of the first aspect.

### BRIEF DESCRIPTION OF DRAWINGS

FIG. 1A and FIG. 1B are schematic scene diagrams of application progress processing in the prior art;
FIG. 2 is a schematic structural diagram of an electronic device according to an embodiment of this application;
FIG. 3 is a block diagram of a software structure of an electronic device according to an embodiment of this application;
FIG. 4 is a schematic flowchart of an embedded window display method according to an embodiment of this application;
FIG. 5 is a schematic scene diagram of embedded window starting of an embedded window display method according to another embodiment of this application;
FIG. 6 is a schematic diagram of a display interface of an embedded window of an embedded window display method according to another embodiment of this application;
FIG. 7A and FIG. 7B are a module interaction diagram of embedded window starting of an embedded window display method according to another embodiment of this application;
FIG. 8 is a schematic diagram of another application covering an embedded window in an example according to this application;
FIG. 9 is a schematic diagram of an input interface covering an embedded window in an example according to this application;
FIG. 10 is a schematic diagram of an adjusted embedded window of an embedded window display method according to another embodiment of this application;
FIG. 11A and FIG. 11B are schematic scene diagrams of application lock interface display in an example according to this application;
FIG. 12 is a schematic diagram of functions of a shortcut card of an embedded window display method according to another embodiment of this application;
FIG. 13 is a schematic flowchart of an embedded window display method according to another embodiment of this application;
FIG. 14 is a schematic diagram of loading of placeholder information in a parent window of an embedded window display method according to another embodiment of this application;
FIG. 15 is a schematic flowchart of an embedded window display method according to another embodiment of this application;
FIG. 16 is a schematic diagram of an embedded window application switching scene of an embedded window display method according to another embodiment of this application;
FIG. 17 is a schematic diagram of an embedded window application switching scene of an embedded window display method according to another embodiment of this application;
FIG. 18 is a module interaction diagram of embedded window exiting of an embedded window display method according to another embodiment of this application;
FIG. 19 is a schematic scene diagram of embedded window exiting of an embedded window display method according to another embodiment of this application; and
FIG. 20 is a schematic structural diagram of an embedded window display apparatus according to this application.

### DESCRIPTION OF EMBODIMENTS

In the specification, claims, and the accompanying drawings of this application, the terms "first", "second", "third", and the like are intended to distinguish different objects but do not indicate a particular order.

In embodiments of this application, the word such as "exemplary" or "for example" is used to represent giving an example, an illustration, or a description. Any embodiment or design scheme described as an "exemplary" or "for example" in the embodiments of this application should not be explained as being more preferred or having more advantages than another embodiment or design scheme. Exactly, use of the word such as "exemplary" or "for example" is intended to present a related concept in a specific manner.

For a clear and concise description of the following embodiments, a brief introduction to an implementation solution to embedded window display is first provided.

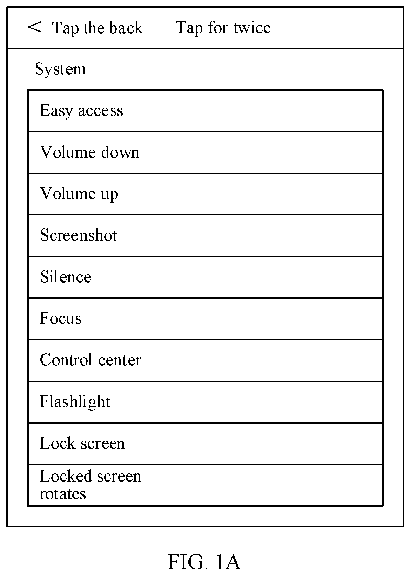

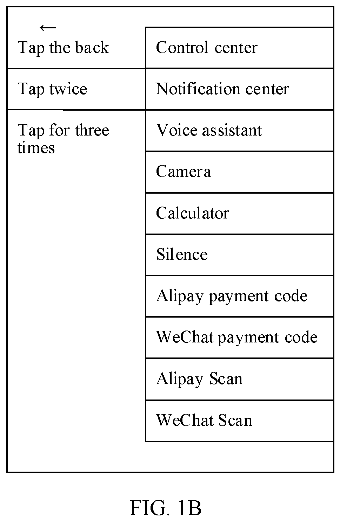

Currently, a user may be provided with a direct operation in any scene by tapping on the back of a mobile phone for two or three times to turn on a custom shortcut function on the mobile phone as shown in FIG. 1A, or tapping on the back of the mobile phone for two or three times to turn on the custom shortcut function on the mobile phone as shown in FIG. 1B. However, interaction with the user cannot be achieved, and immersive experience of the user is interrupted.

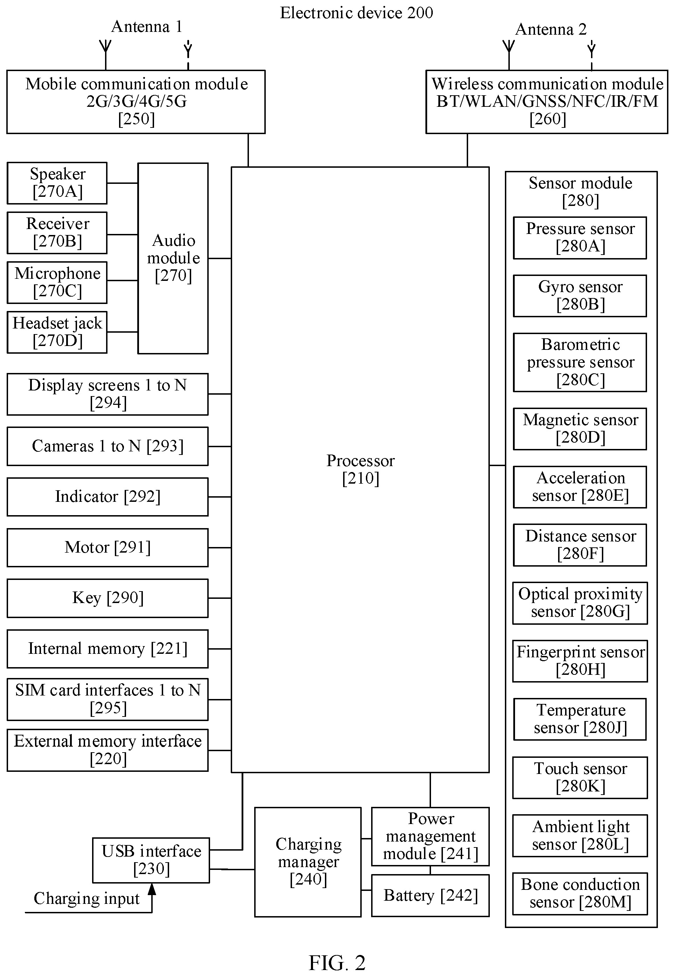

Based on the problem existing in the foregoing technical solution, this application provides an embedded window display method. The method includes: when detecting a preset operation instruction, starting an embedded window in a currently displayed parent window based on the preset operation instruction; displaying an embedded window application corresponding to the preset operation instructions in the embedded window, where the embedded window and the parent window are at a same layer or adjacent layers, and an application displayed in the embedded window is associated with the parent window; and performing, when receiving an operation instruction of the embedded window application, an interaction operation based on the operation instruction of the embedded window application. Therefore, the corresponding application is opened through the embedded window, a one-key operation is achieved, the operation is more convenient, and this application can be used for any application without requiring special adaptation. The provided embedded window display method may be applied to an electronic device such as a mobile phone, a tablet computer, a desktop computer, a laptop computer, a notebook computer, an ultra-mobile personal computer (ultra-mobile personal computer, UMPC), a handheld computer, a netbook, a personal digital assistant (Personal Digital Assistant, PDA), a wearable electronic device, or a smartwatch. A structure of the electronic device to which the embedded window display method is applied may be shown in FIG. 2.

FIG. 2 is a schematic compositional diagram of an electronic device according to an embodiment of this application. The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a telephone receiver 270B, a microphone 270C, a headset jack 270D, a sensor module 280, a button 290, a motor 291, an indicator 292, a camera 293, a display screen 294, a subscriber identity module (subscriber identification module, SIM) card interface 295, and the like. The sensor module 280 may include a pressure sensor 280A, a gyro sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the schematic structure in this embodiment constitutes no specific limitation on the electronic device 200. In some other embodiments, the electronic device 200 may include more or fewer components than those shown in the figures, or some components may be combined, or some components may be split, or components are arranged in different manners. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 200. The controller may generate an operation control signal based on instruction operation code and a sequence signal, to complete control of fetching and executing instructions.

A memory may be further arranged in the processor 210, to store instructions and data. In some embodiments, the memory in the processor 210 is a cache memory. The memory may store instructions or data recently used or cyclically used by the processor 210. If the processor 210 needs to use the instruction or the data again, the processor 210 may directly invoke the instruction or the data from the memory, which avoids repeated access and reduces a waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

It may be understood that a schematic interface connection relationship between the modules in this embodiment of this application is merely an example for description, and constitutes no limitation on the structure of the electronic device 200. In some other embodiments of this application, the electronic device 200 may alternatively use an interface connection manner different from that in the foregoing embodiment, or use a combination of a plurality of interface connection manners.

A wireless communication function of the electronic device 200 may be implemented by using the antenna 1, the antenna 2, the mobile communication module 250, the wireless communication module 260, the modem processor, the baseband processor, and the like.

The wireless communication module 260 may provide a solution for wireless communication including a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like to be applied to the electronic device 200. The wireless communication module 260 may be one or more components into which at least one communication processing module is integrated. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the to-be-sent signal, and convert the to-be-sent signal into an electromagnetic wave for radiation through the antenna 2.

In some embodiments, the antenna 1 and the mobile communication module 250 of the electronic device 200 are coupled, and the antenna 2 and the wireless communication module 260 of the electronic device 200 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 200 implements a display function by using the GPU, the display screen 294, the application processor, and the like. The GPU is a microprocessor for image processing, and is connected to the display screen 294 and the application processor. The GPU is configured to perform mathematical and geometric calculation, and is configured to render a graphic. The processor 210 may include one or more GPUs, and execute program instructions to generate or change display information.

A series of graphical user interfaces (graphical user interface, GUI) may be displayed on the display screen 294 of the electronic device 200, and the GUIs are main screens of the electronic device 200. Generally, dimensions of the display screen 294 of the electronic device 200 are fixed, and only a limited quantity of controls can be displayed in the display screen 294 of the electronic device 200. A control is a GUI element, is a software component included in an application, and controls all data processed by the application and an interaction operation related with the data. The user may interact with the control through direct manipulation (direct manipulation), to read or edit related information of the application. Generally, the control may include visual interface elements such as an icon, a button, a menu, a tab, a text box, a dialog box, a status bar, a navigation bar, and a Widget. For example, in this embodiment of this application, the display screen 291 may display a virtual key (for one-key arrangement, start arrangement, or scene arrangement).

The electronic device 200 may implement a photographing function by using the ISP, the camera 293, the video codec, the GPU, the display screen 294, the application processor, and the like.

The electronic device 200 may implement an audio function, for example, music playing or recording, by using the audio module 270, the speaker 270A, the phone receiver 270B, the microphone 270C, the headset jack 270D, the application processor, and the like.

In addition, an operating system, such as a Hongmeng system, an iOS operating system, an Android open source operating system, or a Windows operating system, runs on the foregoing components. An application may be installed and run on the operating system.

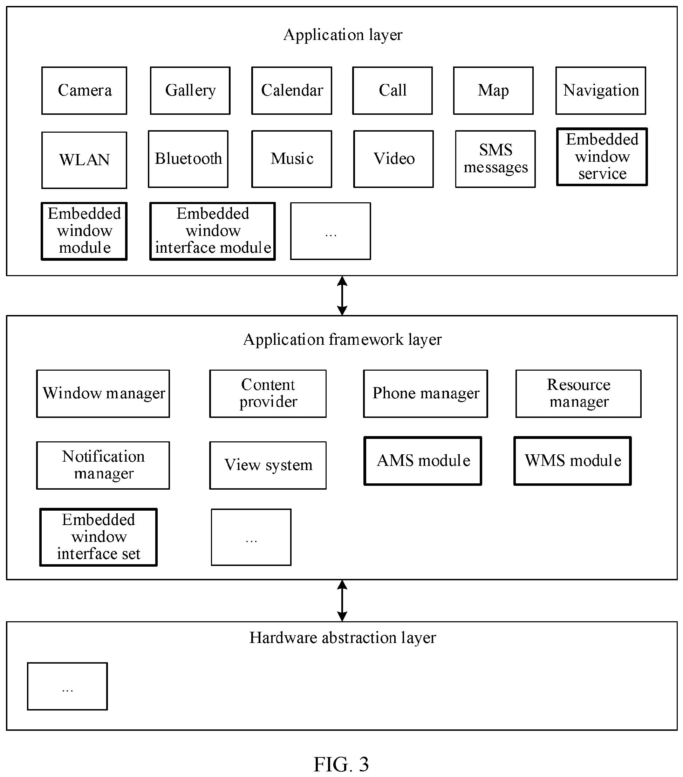

FIG. 3 is a block diagram of a software structure of an electronic device according to an embodiment of this application.

In a layered architecture, software is divided into several layers, and each layer has a clear role and task. The layers communicate with each other through a software interface. In some embodiments of this application, a software architecture of the electronic device includes at least three layers: an application layer, an application framework layer, and a hardware abstraction layer respectively from top to bottom.

The application layer may include a series of application packages. The application packages may include applications such as camera, gallery, calendar, call, map, navigation, WLAN, Bluetooth, music, video, and SMS messages. In some embodiments of this application, the application layer further includes an embedded window service, an embedded window module, and an embedded window interface module. The embedded window service is a newly added module of a SystemUI module, and the embedded window module is a newly added module of a WM-Shell Lib module.

The embedded window module is configured to implement main functions of embedded window display and interaction, including start/exit control, window display control, state synchronization, and event transfer.

The embedded window interface module is configured to implement embedded window capability interface encapsulation, provided for a host process for invocation.

The application framework layer provides an application programming interface (application programming interface, API) and a programming framework for the applications at the application layer. The application framework layer includes some predefined functions. As shown in FIG. 3, the application framework layer may include a window manager, a content provider, a view system, a phone manager, a resource manager, a notification manager, and the like. The window manager is configured to manage a window program. The window manager may obtain a size of the display screen, determine whether there is a status bar, lock the screen, take screenshots, and the like. In some embodiments of this application, the application framework layer further includes an adjusted AMS module, an adjusted WMS module, and a newly added embedded window interface set.

The adjusted AMS module is configured to implement embedded Activity starting and lifecycle management.

The adjusted WMS module is configured to implement embedded Task management, intra-Task Activity jump control, focus and visibility management of an embedded window scene, config update, and compatibility management.

The embedded window interface set is provided for a system application for use.

The content provider is configured to store and obtain data and make the data accessible to an application. The data may include a video, an image, an audio, calls that are made and received, a browsing history and a bookmark, an address book, and the like.

The view system includes visual controls such as a control for displaying text and a control for display an image. The view system may be configured to construct an application. A display interface may include one or more views. For example, a display interface including a short message service notification icon may include a view for displaying text and a view for displaying an image.

The phone manager is configured to provide a communication function of the electronic device, for example, call state management (including getting through, hang-up, and the like).

The resource manager provides various resources such as a localized character string, an icon, an image, a layout file, and a video file for an application.

The notification manager enables an application to display notification information on a status bar that may be configured to convey a message of a notification type, where the message may disappear automatically after a short stay without user interaction. For example, the notification manager is configured to provide a notification of download completion, a message prompt, and the like. The notification manager may alternatively be a notification that appears on a top status bar of the system in a form of a graph or a scroll bar text, for example, a notification of an application running on the background, or may be a notification that appears on the screen in a form of a dialog window. For example, text information is prompted on the status bar, a prompt tone is made, the electronic device vibrates, or an indicator light flashes.

The hardware abstract layer is an interface layer between an operating system kernel of the electronic device 200 and a hardware circuit, with a purpose of abstracting hardware.

For ease of understanding, in the following embodiments of this application, the electronic device 200 having the structures in FIG. 2 and FIG. 3 is used as an example with reference to the accompanying drawings and application scenarios to specifically describe the embedded window display method according to the embodiments of this application.

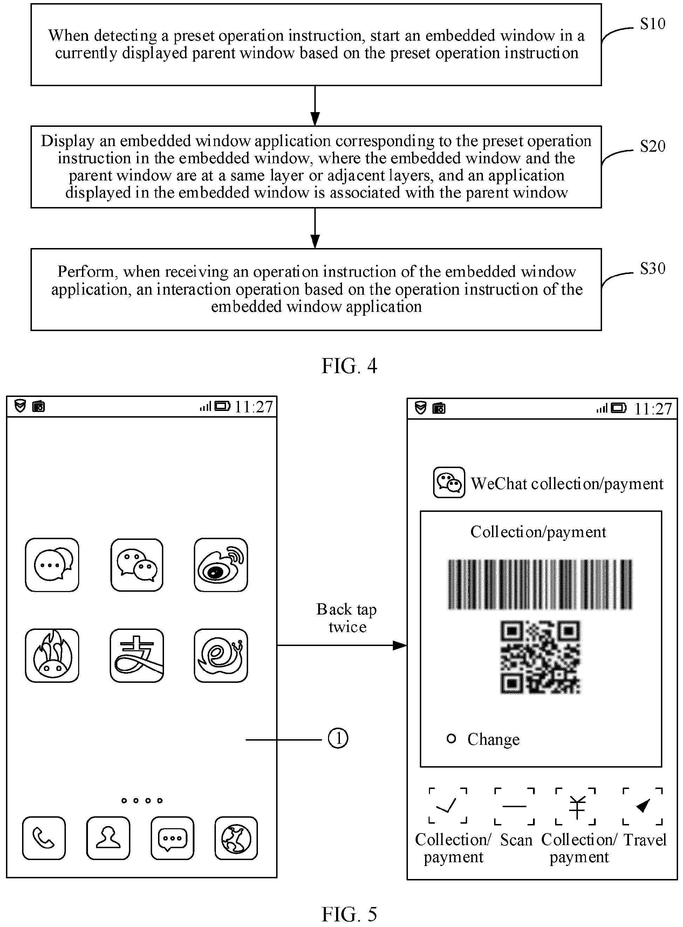

FIG. 4 is a schematic flowchart of an embedded window display method according to an embodiment of this application.

As shown in FIG. 4, the embedded window display method may include the following steps.

Step S10: When detecting a preset operation instruction, start an embedded window in a currently displayed parent window based on the preset operation instruction.

Generally, when a user currently uses a high-frequency shortcut service such as scanning or payment code, the operation is complex. For example, the user needs to first perform unlocking, then open an application, and then select a corresponding service. When the user uses a shortcut service in a turned-off screen or a lock screen, or uses an application such as online conference or video, the operations are not uniform and are inconvenient. In this embodiment, efficient shortcut task window display is implemented by providing a capability of displaying an embedded window to an application window to support a shortcut task card. In other words, the user can open the application in the embedded window through a preset operation during use, an invoke mode shortcut service is directly used, and a window system provides an embedded window display and interactive capability, supporting the shortcut task card Launcher, and helping the user to efficiently use the shortcut task.

During specific implementation, the preset operation instruction may be a back tap operation on the electronic device, or a shortcut gesture operation, or an operation in another form. This is not limited in this embodiment. In this embodiment, a description is made below by using the back tap operation on the electronic device as an example.

It is to be noted that, a quantity of back taps may be set, tapping for more than once within a preset time is an effective tap event, and another quantity of taps may be further set. This is not limited in this embodiment, and may be flexibly adjusted based on a requirement. Tapping twice being a back tap effective event is used as an example for description. To avoid misoperation, tapping twice is used as the back tap effective event, thereby improving accuracy of starting the embedded window.

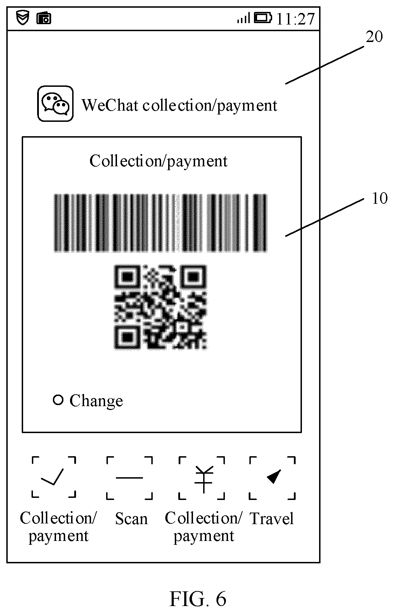

To open an application through the embedded window, FIG. 5 is a schematic scene diagram of embedded window starting, where ① represents a main interface, and a shortcut task card is started by back-tapping twice. The embedded window displays a WeChat collection/payment application, and FIG. 6 is a schematic diagram of a display interface of an embedded window, where 10 represents an embedded window of a loaded application, and 20 represents a parent window.

In a possible implementation, a started application may be started based on a preset application, and there may be one preset started application. In other words, the preset application is started in the embedded window after back-tapping twice. As shown in FIG. 6, the WeChat collection/payment application is started in the embedded window, thereby implementing shortcut application starting.

In a possible implementation, there may be a plurality of preset started applications. When there are a plurality of preset started applications, priorities of the applications may be set, and when an embedded window display application is started, an application with a highest priority is displayed first, and then other applications may be sequentially operated based on a switching operation, thereby improving effectiveness of the shortcut application starting.

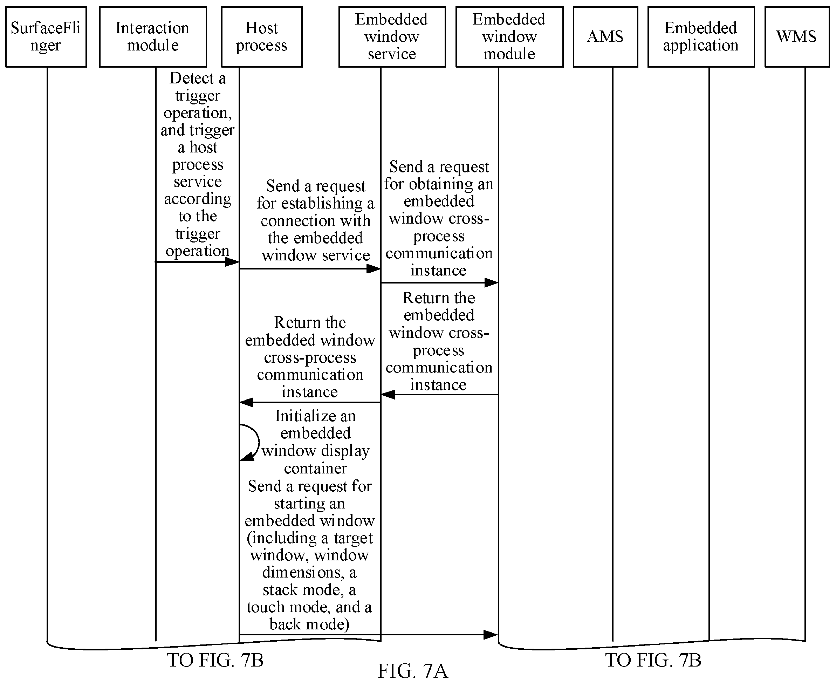

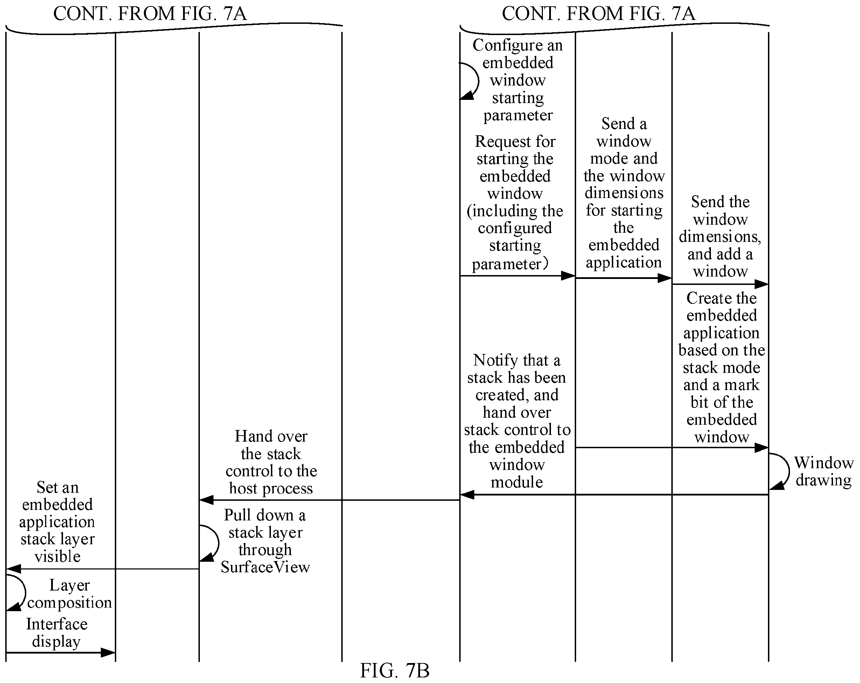

FIG. 7A and FIG. 7B are a module interaction diagram of embedded window starting. When a starting operation of a target application is detected, a host process service is triggered, a host process sends a request for establishing a connection with an embedded window service to the embedded window service, the embedded window service sends a request for obtaining an embedded window cross-process communication instance to an embedded window module, the embedded window module returns the embedded window cross-process communication instance to the embedded window service, and the embedded window service returns the embedded window cross-process communication instance to the host process, to implement direct communication of the host process with the embedded window module, where the host process may be a process corresponding to the parent window.

After the host process establishes a communication connection with the embedded window module, the host process first performs initialization, and completes drawing of the parent window. A specific drawing process is that the host process sends and adds a parent window request to a WMS, where the parent window request includes placeholder map information, and sends a window size of the parent window to a Graphics drawing module for window drawing. The host process further sends layer information to a SurfaceFlinger for layer composition of the parent window. After the layer composition is completed, the parent window is displayed, and then the host process sends a request for starting the embedded window to the embedded window module. The request further includes a starting parameter, and the starting parameter includes a target window, window dimensions, a stack mode, a touch mode, and a Back mode, where the target window represents a window of a corresponding started application, the window dimensions represent dimensions of the embedded window, the stack mode includes an application processing manner in the embedded window, including a new stack, an unstack mode, and a multiplexed main stack mode, the touch mode represents whether a control configured with a touch interaction operation is needed in the embedded window, and the Back mode represents an application return processing manner in the embedded window.

The embedded window module configures a target window of the embedded window, a window mode, window dimensions, a mark bit of the embedded window, and a stack mode based on the received starting parameter, where the window mode represents a display mode of the embedded window, including a display mode such as multi-window, picture-in-picture, or a floating window, and the mark bit of the embedded window represents identification information of the embedded window. The embedded window module sends the target window, the window mode, the window dimensions, the mark bit of the embedded window, and the stack mode to an AMS module. The AMS module sends the window mode and the window dimensions to an embedded application based on the target window for window pull-up, and then sends the mark bit of the embedded window and the stack mode to a WMS module. The embedded application sends the window dimensions to the WMS module for window addition, the WMS module performs window drawing based on the window dimensions and the window size, and a drawing process of the embedded window by the WMS module includes: The embedded application sends the window size to the Graphics drawing module, the Graphics drawing module notifies the WMS module after drawing is completed, the WMS module notifies the embedded window module of creation after the drawing is completed, stack control is handed over to the embedded window module, the embedded window module hands over the stack control to the host process, and the host process performs the layer composition to implement display of the window. That the host process performs the layer composition specifically includes: The host process pulls down a stack layer through SurfaceView and sends a configuration request for setting an embedded application stack layer visible to a SurfaceFlinger module, and the SurfaceFlinger module performs the layer composition, and notifies an interactive module for interface display after the composition is completed, thereby completing the embedded window starting.

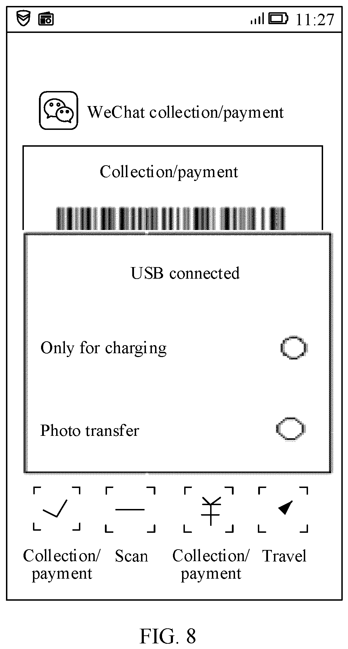

In addition, an effect of the embedded window may also be started in a floating window form, then an upper layer is covered with a system card wallet window, and an application interface at a lower layer is shown after the card wallet window is "hollowed out". In this manner, there is no need to add an additional window capability, and a card display effect is achieved with less effort, but there are problems in three aspects.
(1) Hierarchy problem There are other types of windows between a third-party application window and the card wallet window, and the card display effect is disrupted if the windows pop up. FIG. 8 is a schematic diagram of another application covering an embedded window. In this embodiment, because application switching is performed through the embedded window, the third-party application window and the card wallet window are substantially at a same layer, and the hierarchy problem may be resolved.
(2) Task management problem A main Task stack of a third-party application is directly used for card form display, and is used in a card form scene and a general full-screen-form scene. Activity interface states of the Task stack interfere with each other, causing a poor user experience. For example, the user is chatting using WeChat, and then calls out a card wallet to display WeChat payment code. The system switches WeChat into a card form and starts a payment code interface in the main Task stack of WeChat. When returning to WeChat after payment is completed, the user finds that WeChat is back to the head interface. This is because a main Task of WeChat is cleaned up after WeChat exits the card form and is prevented from staying at the payment code interface, but this affects the user in returning to the previous chatting task.

However, in this embodiment, because control of the embedded window is handed over to the host process through the embedded window module after window drawing is completed through the embedded window, and the Back mode of the embedded window is determined by the parent window, to ensure normal use of the embedded window.

When the starting parameter of the embedded window is configured, because the Back mode of the embedded window may be configured based on a requirement, it is determined to return to a designated main interface or application based on the Back mode. For example, when the embedded window is displayed as the WeChat collection/payment application, the user performs a return operation. In the new stack and the unstack mode, a Back event is triggered in a scenario that an embedded Task root Activity is displayed in the foreground, the Back event is consumed in an Android native flow, and service logic is: destroying the Activity. Eventually, the embedded window is destroyed and the parent window thereof is undestroyed, causing a display error.

In the multiplexed main stack mode, the Back event is triggered in the scenario that the embedded Task root Activity is displayed in the foreground, the Back event is consumed in the Android native flow, and the business logic is: destroying the Activity, and displaying another Activity under the Activity. Eventually, an embedded window that is not pulled up by the user is displayed in an embedded window display area.

In a possible implementation, in this embodiment, when it is determined to return to the designated main interface through the Back mode, the user performs the return operation to return to the main interface when the embedded window is displayed as the WeChat collection/payment application, thereby avoiding causing the display error or displaying the embedded window that is not pulled up by the user in the embedded window display area.

In a possible implementation, in this embodiment, when it is determined to return to a designated upper-layer application through the Back mode, the user performs the return operation to return to an upper-layer application interface when the embedded window is displayed as the WeChat collection/payment application, thereby avoiding causing the display error or displaying the embedded window that is not pulled up by the user in the embedded window display area. It is to be noted that, the Back mode may also be flexibly configured based on a requirement, thereby improving flexibility of interface operation display.

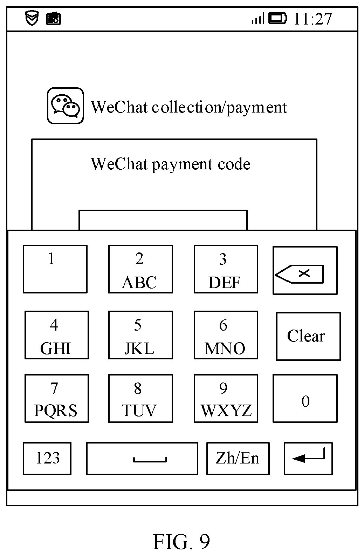

(3) System and application window synchronization problem Because the system card wallet window and the third-party application window are "two surfaces", there is no necessary association, it is not easy to perform association processing, and a state mismatch may occur in some scenes if adaptation is not comprehensive. FIG. 9 is a schematic diagram of an input interface covering an embedded window.

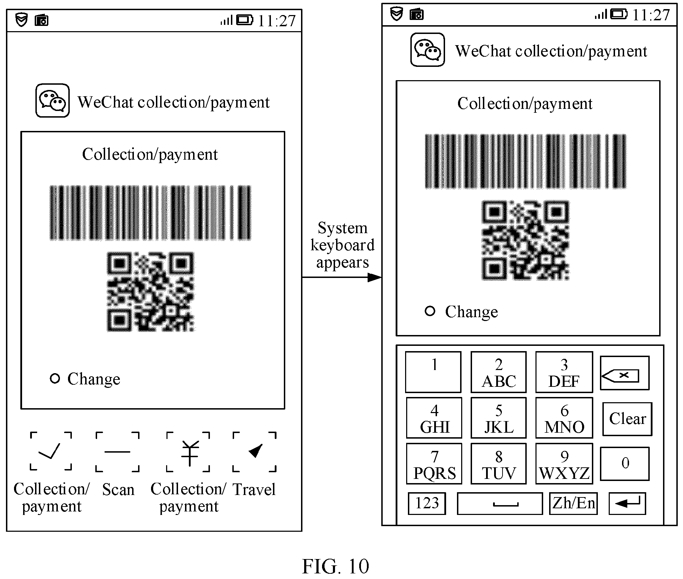

In a possible implementation, to support a shortcut service card interface, a problem of hierarchical association may be resolved, and an embedded window interaction operation is supported. In an aspect of Task management, the system provides a plurality of embedded Task stack operation modes, including a stand-alone Task, a multiplexed master Task, and main Task unstack, and an appropriate operation mode is selected based on compatibility of the embedded application. In an aspect of system and application window synchronization, a synchronization event notification is added, and necessary adjustment is made to an embedded application window by a shortcut service card Launcher. Specifically, a preset synchronization event is obtained, and a display position of the embedded window is adjusted based on the preset synchronization event. FIG. 10 is a schematic diagram of an adjusted embedded window. The preset synchronization event may be starting another system application. For example, in a case that an input interface operation needs to be performed when the WeChat collection/payment application is displayed in the embedded window, the embedded window may be moved up, to avoid a case of the input interface covering the embedded window, thereby improving effectiveness of use of the embedded window.

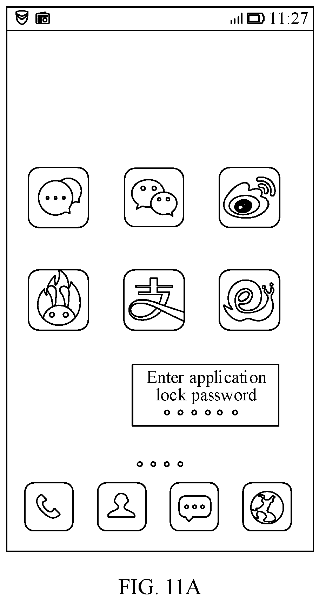

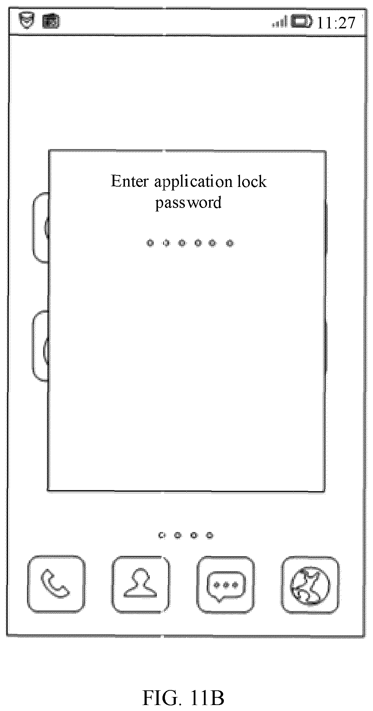

In a possible implementation, in this embodiment, because the control of the embedded window is handed over to the host process through the embedded window module after the window drawing is completed through the embedded window, and the window mode of the embedded window is determined by the host process, to ensure normal use of the embedded window. For example, when the embedded window starts a corresponding application, when the application is configured with an application lock, a starting state of an application lock authentication interface can only be consistent with a starting interface. For example, when an application lock interface is loaded in a floating window, picture-in-picture pip, or a bubble, an interface form thereof is naturally the floating window, the picture-in-picture, or the bubble, as shown in an application lock interface in a picture-in-picture mode in FIG. 11A and an application lock interface in a floating window mode in FIG. 11B. However, if an input method needs to be invoked in an application lock unlocking interface, in a case that window dimensions of the application lock interface are small, an input interface cannot be fully displayed in the application lock interface. FIG. 11A and FIG. 11B are schematic scene diagrams of application lock interface display in the prior art.

However, in this embodiment, when a starting operation of a target application is detected, a preset display mode of the application lock interface is obtained based on the starting operation. The application lock interface is displayed based on the preset display mode of the application lock interface, so that the application lock interface may be displayed based on the preset display mode of the application lock interface, namely, the window mode, there is no need of determining based on a form of the starting interface, and flexibility of starting of the application lock authentication interface is improved. To avoid that the application lock interface is not fully displayed, the application lock interface is set for full-screen display, to ensure normal display of the application lock interface.

During specific implementation, in this embodiment, the embedded window module obtains the preset display mode of the application lock interface, namely, the window mode, designates the display mode based on a configuration, and starts the embedded window through the AMS module in the display mode. The AMS module then sends the display mode and the window dimensions to the embedded application for pulling up an embedded application window, thereby avoiding determining based on the form of the starting interface, but displaying the application lock interface through the preset display mode of the application lock interface, improving the flexibility of the starting of the application lock authentication interface.

In another embodiment, because the embedded window starting is implemented, after the embedded window is displayed, a foreground focus is generally on the embedded window. When a to-be-processed event is obtained, the to-be-processed event is transmitted to a window corresponding to the foreground focus for processing. However, when the embedded window consumes the to-be-processed event, in the new stack and the unstack mode, a Back event is triggered in a scenario that an embedded Task root Activity is displayed in the foreground, the Back event is consumed in an Android native flow, and service logic is: destroying the Activity. Eventually, the embedded window is destroyed and the parent window thereof is undestroyed, causing a display error. In the multiplexed main stack mode, the Back event is triggered in the scenario that the embedded Task root Activity is displayed in the foreground, the Back event is consumed in the Android native flow, and the business logic is: destroying the Activity, and displaying another Activity under the Activity. Eventually, an embedded window that is not pulled up by the user is displayed in an embedded window display area. Therefore, the to-be-processed event is handed over to the host process corresponding to the parent window for processing, and interaction between the embedded window and the parent window thereof is implemented.

To implement the interaction between the embedded window and the parent window thereof, whether a foreground focus window is the embedded window or not is first determined. The foregoing problem does not occur if the foreground focus window is not the embedded window, and the foregoing problem occurs if the foreground focus window is the embedded window, thereby improving efficiency of system processing.

During specific implementation, a NativeInputManager module sends the to-be-processed event to a PhoneWindowManager module when obtaining the to-be-processed event, the PhoneWindowManager module sends an instruction for determining whether the foreground focus window is the embedded window to a WindowState module, and the WindowState module determines whether a global variable mActivityRecord is empty. When the global variable mActivityRecord is empty, a determining result is returned to the PhoneWindowManager module, and the PhoneWindowManager module returns the determining result to the NativeInputManager module. When the global variable mActivityRecord is not empty, whether the foreground focus window is the embedded window is determined. If the foreground focus window is the embedded window, a foreground processing tag is canceled, the host process is called back and notified to an ActivityTaskManageInternal module, and the ActivityTaskManageInternal module then notifies an HnEmbeddedView module, thereby notifying the host process for processing. If the foreground focus window is not the embedded window, a determining result is returned to the PhoneWindowManager module, and the PhoneWindowManager module returns the determining result to the NativeInputManager module. The NativeInputManager module sends the determined to-be-processed event to an InputDispatcher module, and the InputDispatcher module determines whether the to-be-processed event includes the foreground processing tag. If it is determined that the to-be-processed event includes the foreground processing tag, the to-be-processed event is dispatched to a foreground focus window application for processing. If it is determined that the to-be-processed event does not include the foreground processing tag, the to-be-processed event is discarded.

Step S20: Display an application corresponding to the preset operation instruction and an interaction component in the embedded window, where the embedded window and the parent window are at a same layer or adjacent layers, and an application displayed in the embedded window is associated with the parent window.

In this embodiment, when the application corresponding to the preset operation instruction is displayed in the embedded window, the interaction component may be further displayed. Still, a change component shown in FIG. 6 may be operated, and during specific implementation, when the embedded window is configured, the interaction component in the embedded window may be determined by setting the touch mode, thereby implementing the user operation, and improving the user interaction experience.

Step S30: Perform, when receiving an operation instruction of the embedded window application, an interaction operation based on the operation instruction of the embedded window application.

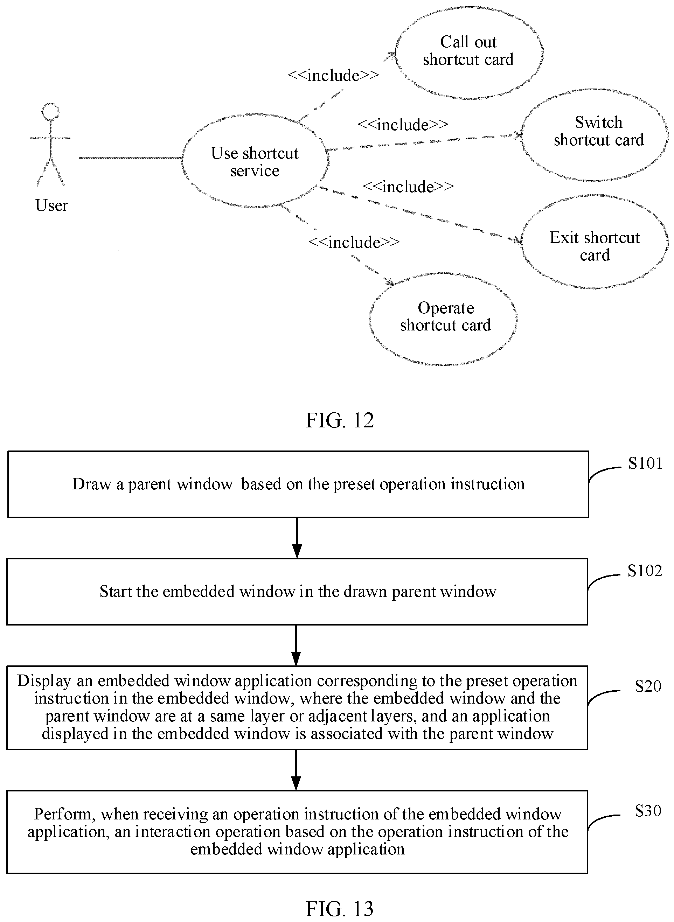

FIG. 12 is a schematic diagram of functions of a shortcut card. By using a shortcut service, the user may implement functions such as calling out the shortcut card, switching the shortcut card, exiting the shortcut card, and operating the shortcut card, thereby expanding the function of the shortcut card and enhancing use of the shortcut card. In addition, an Android Bubble feature embeds the application interface into a Bubble window. Another application requires special adaptation. However, an embedded application in this embodiment does not require special adaptation. A host process of an Android Bubble embedded window can only be SystemUI, while any application in this embodiment can be used as a host process.

In this embodiment, when the preset operation instruction is detected, the embedded window is started in the currently displayed parent window based on the preset operation instruction; the embedded window application corresponding to the preset operation instruction is displayed in the embedded window, where the embedded window and the parent window are at the same layer or the adjacent layers, and the application displayed in the embedded window is associated with the parent window; and when the operation instruction of the embedded window application is received, the interaction operation is performed based on the operation instruction of the embedded window application. Therefore, the corresponding application is opened through the embedded window, a one-key operation is achieved, the operation is more convenient, and this application can be used for any application without requiring special adaptation.

FIG. 13 is a flowchart of an embedded window display method according to another embodiment of this application. As shown in FIG. 13, the embedded window display method is based on the first embodiment, and step S10 includes the following steps.

Step S101: Draw a parent window based on the preset operation instruction.

During specific implementation, a window size of a to-be-drawn parent window and placeholder information of an embedded window in the to-be-drawn parent window are obtained; and window drawing and layer composition are performed based on the window size of the to-be-drawn parent window and the placeholder information of the embedded window, to obtain the drawn parent window.

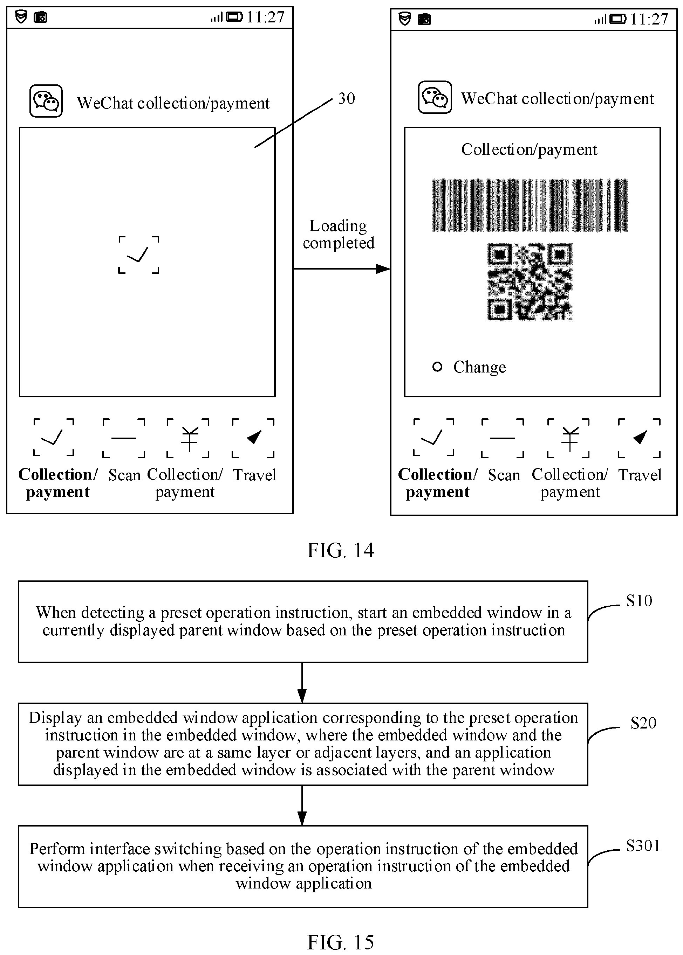

Loading of the placeholder information in the parent window is shown in FIG. 14, where 30 represents a placeholder area at the embedded window. During drawing of the parent window, the placeholder information of the embedded window in the to-be-drawn parent window is included, the parent window is drawn based on the placeholder information of the embedded window in the to-be-drawn parent window, and the display area of the embedded window is reserved based on the placeholder information of the embedded window, to facilitate the loading of the embedded window application.

In a possible implementation, the starting an embedded window in a currently displayed parent window based on the preset operation instruction includes: obtaining a target window, a window mode, window dimensions of the embedded window, a mark bit of the embedded window, a stack mode of the embedded window, and a touch mode of the embedded window; and drawing the embedded window based on the target window, the window mode, the window dimensions of the embedded window, the mark bit of the embedded window, the stack mode of the embedded window, and the touch mode of the embedded window, to obtain the embedded window.

Still, FIG. 7A and FIG. 7B are a module interaction diagram of embedded window starting. When the embedded window is started, the embedded window is configured by using the starting parameter, and the drawing of the embedded window is completed. The starting parameter includes the target window, the window mode, the window dimensions of the embedded window, the mark bit of the embedded window, the stack mode of the embedded window, the touch mode of the embedded window, the Back mode, and the like.

In a possible implementation, after the drawing the embedded window based on the target window, the window mode, the window dimensions of the embedded window, the mark bit of the embedded window, the stack mode of the embedded window, and the touch mode of the embedded window, the method further includes: when completing creation of the stack mode of the embedded window, handing over stack control to a host process corresponding to the parent window.

It is to be noted that, the stack mode of the embedded window in this embodiment may be adjusted based on an actual requirement. Because the embedded window is started in this embodiment, after the embedded window is started, and when the foreground focus is on the embedded window, generally, when an operation event is obtained, the operation event is processed by the embedded window corresponding to the foreground focus. However, in a case that the embedded window goes wrong, for example, an error occurs in an application, the operation event cannot be processed, while in this embodiment, the stack control is handed over to the host process corresponding to the parent window without being processed through the embedded window. By handing over the stack control to the host process corresponding to the parent window, when the operation event is obtained, event processing is performed on the operation event through the host process corresponding to the parent window, to ensure a normal response to the event.

Step S102: Start the embedded window in the drawn parent window.

In a possible implementation, during drawing of the embedded window, a window size of an application corresponding to the preset operation instruction and configured window dimensions of the embedded window are obtained; and a display area of the application corresponding to the preset operation instruction is determined based on the window size and the configured window dimensions of the embedded window; and the application corresponding to the preset operation instruction is displayed based on the display area.

It is to be noted that, the window dimensions have been configured for the embedded window module, but the configured window dimensions of the embedded window module may be inconsistent with the window size of the pulled-up embedded application. To ensure normal display of the application corresponding to the preset operation instruction in the embedded window, moderate adjustment may be performed based on the window size and the configured window dimensions of the embedded window.

FIG. 15 is a flowchart of an embedded window display method according to another embodiment of this application. As shown in FIG. 15, the embedded window display method is based on the first embodiment, and step S30 includes the following steps.

Step S301: Perform interface switching based on the operation instruction of the embedded window application when receiving the operation instruction of the embedded window application.

It is to be noted that, an interaction component is arranged on the embedded window application. For example, there is a change component in the embedded window application in FIG. 6. An interaction operation may be performed through the change component. The operation instruction of the embedded window application may alternatively be a left slide operation or a right slide operation, or an operation in another form.

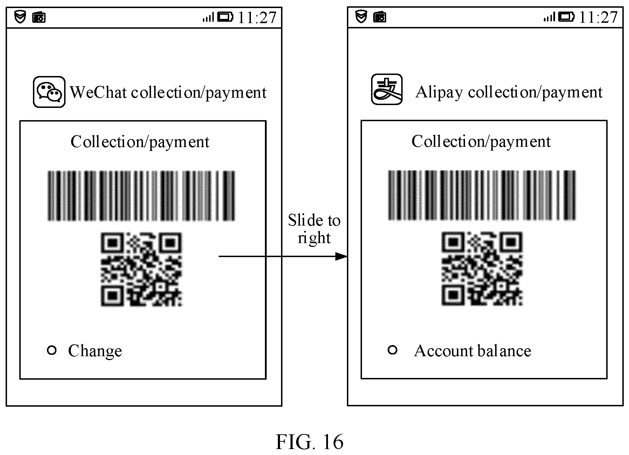

When the left slide operation or the right slide operation is performed on the embedded window application, switching of the embedded window application may be implemented. For example, WeChat collection/payment of the embedded window application is switched to an Alipay payment application. An embedded window application switching scene is shown in FIG. 16. The interaction component may also be arranged in the embedded window, and application switching is performed through the interaction component, thereby performing interface switching. The interaction component may be a switching button, or may be a switching manner in another form. This is not limited in this embodiment.

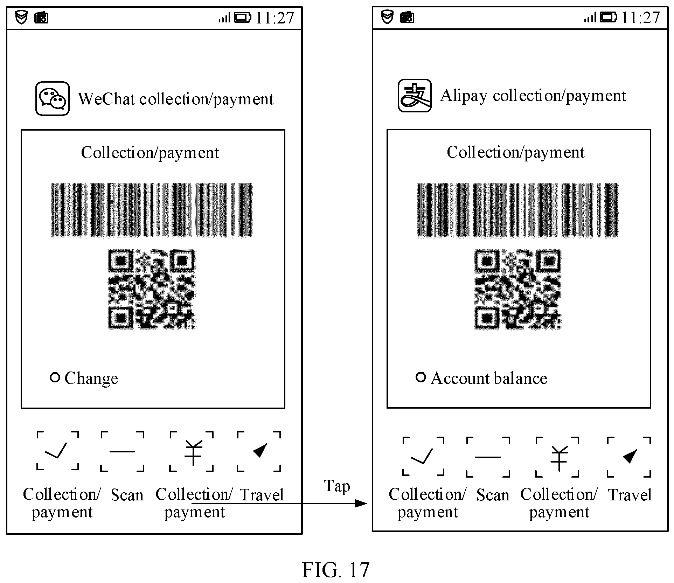

In a possible implementation, the interaction component may also be arranged on a shortcut task card. The shortcut task card is a Launcher started through a preset operation. The shortcut task card includes the embedded window and the interaction component, and application switching is performed through the interaction component arranged on the shortcut task card. An embedded window application switching scene of another embodiment is shown in FIG. 17. Through the interaction component such as collection/payment in the shortcut task card, the WeChat collection/payment application in the embedded window application may be switched to the Alipay payment application, thereby improving flexibility of embedded window display.

In a possible implementation, after step S20, the method further includes: obtaining an exit instruction, and returning to a target interface based on the exit instruction. This is specifically: removing an embedded task stack based on the exit instruction, and returning to the target interface.

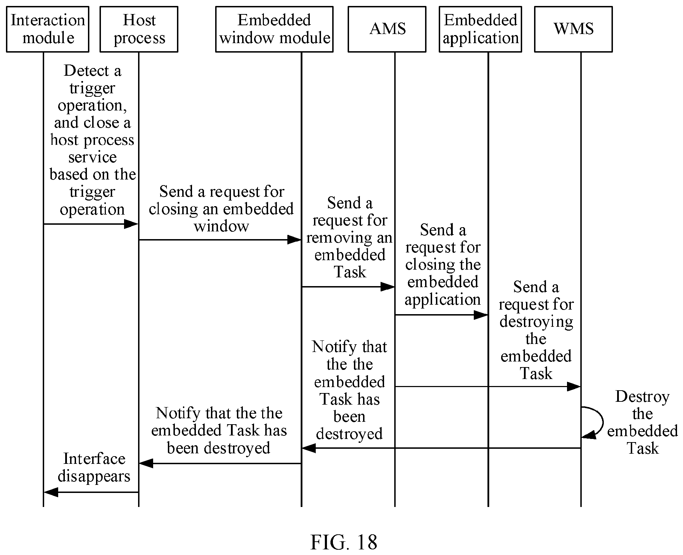

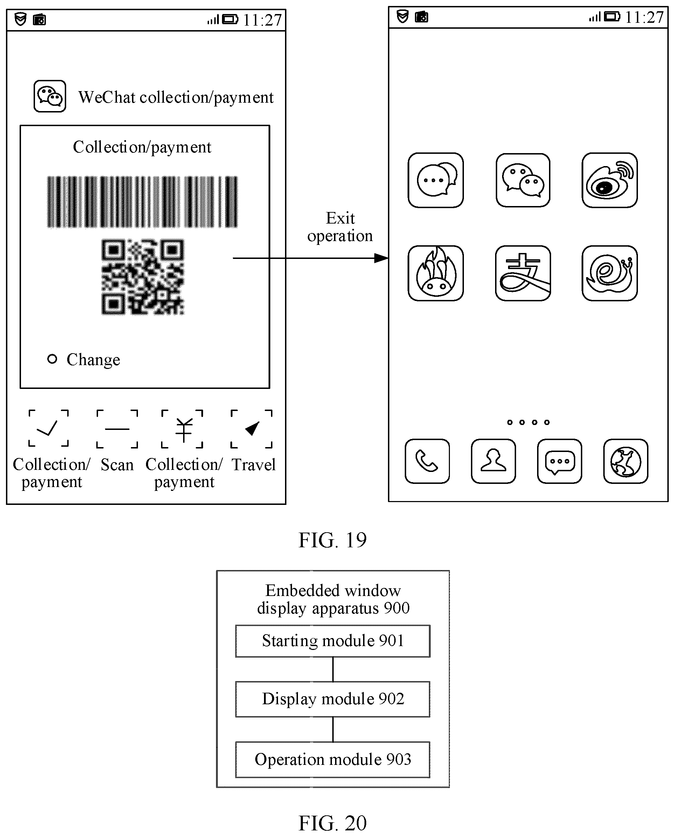

It is to be noted that, the interaction component arranged on the embedded window application may also be a close control. The exit instruction may be obtained by tapping the close control, and the exit instruction may be further executed through a sliding operation. This is not limited in this embodiment. The target interface may be a main interface, or may be an upper-layer application interface running in the system. This is not limited in this embodiment. A Back mode may be set when the embedded window is configured, the embedded window may be return to the designated target interface through the Back mode when exited. For example, if the Back mode is configured as the main interface, the embedded window is exited when an exit event is monitored by the embedded window. FIG. 18 is a module interaction diagram of embedded window exiting. When a trigger operation of the close control is detected, based on the trigger operation, a host process service is triggered to be closed. The host process sends a request for closing the embedded window to the embedded window module, the embedded window module sends a request for removing an embedded Task to the AMS module, the AMS module sends a request for closing the embedded application to the embedded application, the AMS module further sends a request for destroying the embedded Task to the WMS module, the WMS module destroys the embedded Task and notifies the embedded window module that the embedded Task has been destroyed, and the embedded window module notifies the host process that the embedded Task has been destroyed. An interface of the embedded window displayed at the interaction module disappears, and the embedded window returns to the designated target interface. FIG. 19 is a schematic scene diagram of embedded window exiting.

In this embodiment, an exit function of the embedded window is implemented at the embedded window, and the embedded task stack is removed based on the exit instruction, the embedded window returns to the target interface, thereby returning to the designated target interface and improving accuracy of interface display.

FIG. 20 is a schematic structural diagram of an embedded window display apparatus according to this application. The embedded window display apparatus 900 provided in this application includes:
a starting module 901, configured to: when a preset operation instruction is detected, start an embedded window in a currently displayed parent window based on the preset operation instruction;
a display module 902, configured to display an embedded window application corresponding to the preset operation instruction in the embedded window, where the embedded window and the parent window are at a same layer or adjacent layers, and an application displayed in the embedded window is associated with the parent window; and
an operation module 903, configured to perform, when an operation instruction of the embedded window application is received, an interaction operation based on the operation instruction of the embedded window application.

In the embedded window display method provided in this application, in this embodiment, when the preset operation instruction is detected, the embedded window is started in the currently displayed parent window based on the preset operation instruction; the embedded window application corresponding to the preset operation instruction is displayed in the embedded window, where the embedded window and the parent window are at the same layer or the adjacent layers, and the application displayed in the embedded window is associated with the parent window; and when the operation instruction of the embedded window application is received, the interaction operation is performed based on the operation instruction of the embedded window application. Therefore, the corresponding application is opened through the embedded window, a one-key operation is achieved, the operation is more convenient, and this application can be used for any application without requiring special adaptation.

In a possible implementation, the starting module 901 is further configured to: the starting an embedded window in a currently displayed parent window based on the preset operation instruction includes:
draw a parent window based on the preset operation instruction; and
start the embedded window in the drawn parent window.

In a possible implementation, the starting module 901 is further configured to obtain a window size of a to-be-drawn parent window and placeholder information of an embedded window in the to-be-drawn parent window; and
perform window drawing and layer composition based on the window size of the to-be-drawn parent window and the placeholder information of the embedded window, to obtain the drawn parent window.

In a possible implementation, the starting module 901 is further configured to obtain a target window, a window mode, window dimensions of the embedded window, a mark bit of the embedded window, a stack mode of the embedded window, and a touch mode of the embedded window; and
perform drawing of the embedded window based on the target window, the window mode, the window dimensions of the embedded window, the mark bit of the embedded window, the stack mode of the embedded window, and the touch mode of the embedded window, to obtain the embedded window.

In a possible implementation, the starting module 901 is further configured to: when creation of the stack mode of the embedded window is completed, hand over stack control to a host process corresponding to the parent window.

In a possible implementation, the display module 902 is further configured to: during drawing of the embedded window, obtain a window size of an application corresponding to the preset operation instruction and configured window dimensions of the embedded window; determine a display area of the application corresponding to the preset operation instruction based on the window size and the configured window dimensions of the embedded window; and
display the application corresponding to the preset operation instruction based on the display area.

In a possible implementation, the display module 902 is further configured to obtain a preset synchronization event; and
adjust a display position of the embedded window based on the preset synchronization event.

In a possible implementation, the operation module 903 is further configured to perform interface switching based on the operation instruction of the embedded window application when the operation instruction of the embedded window application is received.

In a possible implementation, the operation module 903 is further configured to obtain an exit instruction, and return to a target interface based on the exit instruction.

In a possible implementation, the operation module 903 is further configured to remove an embedded task stack based on the exit instruction, and return to the target interface.

It should be understood that the electronic device herein is represented in a form of a functional module. The term "module" may be implemented through the form of software and/or hardware, which is not specifically limited. For example, the "module" may be a software program, a hardware circuit, or a combination of the two, to implement the foregoing functions. The hardware circuit may include an application specific integrated circuit (application specific integrated circuit, ASIC), an electronic circuit, a processor (for example, a shared processor, a dedicated processor, or a packet processor) configured to execute one or more software or firmware programs, a memory, a combined logical circuit, and/or another suitable component that supports the described functions.

This application further provides an electronic device, including: one or more processors; a memory; and one or more computer programs, where the one or more computer programs are stored in the memory, the one or more computer programs include instructions, and the instructions, when executed by the electronic device, cause the electronic device to perform the embedded window display method according to any one of the foregoing first aspect or the possible implementations of the first aspect.

This application further provides a computer-readable storage medium, having a computer program stored therein, the computer program, when executed by a processor, causing the processor to perform the embedded window display method according to any one of the foregoing first aspect or the possible implementations of the first aspect.

This application further provides a chip, including a processor and a data interface, where the processor reads, through the data interface, instructions stored in the memory, to perform the embedded window display method according to any one of the foregoing first aspect or the possible implementations of the first aspect.

Optionally, the chip may further include the memory, having the instructions stored therein, where the processor is configured to execute the instructions stored in the memory, and when the instructions are executed, the processor is configured to perform the embedded window display method according to any one of the foregoing first aspect or the possible implementations of the first aspect.

The memory may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (comprising compressed optical discs, laser discs, optical discs, digital versatile optical discs, and Blu-ray discs), magnetic disk storage media, or another magnetic storage device, or may be any another medium that can be used to carry or store desired program code in the form of an instruction or a data structure and that can be accessed by a computer.

In the embodiments of this application, "and/or" describes an association relationship for describing associated objects and represents that three relationships may exist. For example, A and/or B may represent the following cases: Only A exists, both A and B exist, and only B exists. A and B may be singular or plural. The character "/" generally indicates an "or" relationship between the associated objects. "At least one of the followings" and similar expressions refer to any combination of these terms, including any combination of a singular or plural term. For example, at least one of a, b, or c may represent a, b, c, "a-b", "a-c", "b-c", or "a-b-c", where a, b, and c may be singular or plural.

A person of ordinary skill in the art may be aware that the units and algorithm steps described in the embodiments disclosed herein can be implemented by a combination of electronic hardware, computer software, and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can clearly understand that for convenience and conciseness of description, the specific working processes of the above-described systems, devices and units can be understood with reference to the corresponding processes in the above-described method embodiments and will not be repeated here.

In several embodiments provided in this application, when any function is implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and comprises several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Therefore, the protection scope of this application shall be subject to the protection scope of the claims.

## Claims

1. An embedded window display method for a display apparatus, the method comprising:
when detecting a preset operation instruction, starting (S10) an embedded window (10) in a currently displayed parent window (20) based on the preset operation instruction;
displaying (S20) an embedded window application corresponding to the preset operation instruction in the embedded window (10), wherein the embedded window (10) and the parent window (20) are at a same layer or adjacent layers, and an application displayed in the embedded window (10) is associated with the parent window (20);
performing (S30), when receiving an operation instruction of the embedded window application, an interaction operation based on the operation instruction of the embedded window application;
**characterized by**:
determining whether a foreground focus window is the embedded window; and
canceling a foreground processing tag associated with a to-be-processed event and redirecting the to-be-processed event to the parent window for processing when determined that the foreground focus window is the embedded window.

2. The embedded window display method according to claim 1, wherein the starting an embedded window (10) in a currently displayed parent window (20) based on the preset operation instruction comprises:
drawing a parent window (20) based on the preset operation instruction; and
starting the embedded window (10) in the drawn parent window (20).

3. The embedded window display method according to claim 2, wherein the drawing a parent window (20) based on the preset operation instruction comprises:
obtaining a window size of a to-be-drawn parent window (20) and placeholder information of an embedded window (10) in the to-be-drawn parent window (20); and
performing window drawing and layer composition based on the window size of the to-be-drawn parent window (20) and the placeholder information of the embedded window (10), to obtain the drawn parent window (20).

4. The embedded window display method according to claim 1, wherein the starting an embedded window (10) in a currently displayed parent window (20) based on the preset operation instruction comprises:
obtaining a target window, a window mode, window dimensions of the embedded window (10), a mark bit of the embedded window (10), a stack mode of the embedded window (10), and a touch mode of the embedded window (10); and
drawing the embedded window (10) based on the target window, the window mode, the window dimensions of the embedded window (10), the mark bit of the embedded window (10), the stack mode of the embedded window (10), and the touch mode of the embedded window (10), to obtain the embedded window (10).

5. The embedded window display method according to claim 4, wherein after the drawing the embedded window (10) based on the target window, the window mode, the window dimensions of the embedded window (10), the mark bit of the embedded window (10), the stack mode of the embedded window (10), and the touch mode of the embedded window (10), the method further comprises:
when completing creation of the stack mode of the embedded window (10), handing over stack control to a host process corresponding to the parent window (20).

6. The embedded window display method according to claim 1, wherein the displaying an embedded window application corresponding to the preset operation instruction in the embedded window (10) comprises:
during drawing of the embedded window (10), obtaining a window size of an application corresponding to the preset operation instruction and configured window dimensions of the embedded window (10);
determining a display area of the application corresponding to the preset operation instruction based on the window size and the configured window dimensions of the embedded window (10); and
displaying the application corresponding to the preset operation instruction based on the display area.

7. The embedded window display method according to claim 1, wherein after the displaying an embedded window application corresponding to the preset operation instruction in the embedded window (10), the method further comprises:
obtaining a preset synchronization event; and
adjusting a display position of the embedded window (10) based on the preset synchronization event.

8. The embedded window display method according to claim 1, wherein the performing, when receiving an operation instruction of the embedded window application, an interaction operation based on the operation instruction of the embedded window application comprises:
performing interface switching based on the operation instruction of the embedded window application when receiving the operation instruction of the embedded window application.

9. The embedded window display method according to claim 1, wherein after the performing, when receiving an operation instruction of the embedded window application, an interaction operation based on the operation instruction of the embedded window application, the method further comprises:
obtaining an exit instruction, and returning to a target interface based on the exit instruction.

10. The embedded window display method according to claim 9, wherein the obtaining an exit instruction, and returning to a target interface based on the exit instruction comprises: removing an embedded task stack based on the exit instruction, and returning to the target interface.

11. An embedded window display apparatus, comprising:
a starting module (901), configured to: when a preset operation instruction is detected, start an embedded window (10) in a currently displayed parent window (20) based on the preset operation instruction;
a display module (902), configured to display an embedded window application corresponding to the preset operation instruction in the embedded window (10), wherein the embedded window (10) and the parent window (20) are at a same layer or adjacent layers, and an application displayed in the embedded window (10) is associated with the parent window (20); and
an operation module (903), configured to perform, when an operation instruction of the embedded window application is received, an interaction operation based on the operation instruction of the embedded window application;
**characterized in that** the operation module (903) is further configured to
determine whether a foreground focus window is the embedded window; and
cancel a foreground processing tag associated with a to-be-processed event and redirect the to-be-processed event to the parent window for processing when determined that the foreground focus window is the embedded window.

12. A computer-readable storage medium, having a computer program stored therein, wherein the computer program, when executed by a processor (210) of a display apparatus, causes the processor (210) to perform the embedded window display method according to any one of claims 1 to 9.

## Patentansprüche

1. Ein Anzeigeverfahren für ein eingebettetes Fenster für eine Anzeigevorrichtung, wobei das Verfahren umfasst:
beim Erkennen eines voreingestellten Bedienbefehls, Starten (S10) eines eingebetteten Fensters (10) in einem aktuell angezeigten übergeordneten Fenster (20) basierend auf dem voreingestellten Bedienbefehl;
Anzeigen (S20) einer dem voreingestellten Bedienbefehl entsprechenden Anwendung des eingebetteten Fensters im eingebetteten Fenster (10), wobei sich das eingebettete Fenster (10) und das übergeordnete Fenster (20) auf derselben Ebene oder auf benachbarten Ebenen befinden und eine im eingebetteten Fenster (10) angezeigte Anwendung mit dem übergeordneten Fenster (20) verknüpft ist;
Durchführen (S30), bei Empfang eines Bedienbefehls der Anwendung des eingebetteten Fensters, eines Interaktionsvorgangs basierend auf dem Bedienbefehl der Anwendung des eingebetteten Fensters;
**gekennzeichnet durch**:
Bestimmen, ob ein im Vordergrund fokussiertes Fenster das eingebettete Fenster ist; und
Aufheben einer mit einem zu verarbeitenden Ereignis verknüpften Vordergrundverarbeitungskennzeichnung und Umleiten des zu verarbeitenden Ereignisses an das übergeordnete Fenster zur Verarbeitung, wenn bestimmt wird, dass das im Vordergrund fokussierte Fenster das eingebettete Fenster ist.

2. Das Anzeigeverfahren für ein eingebettetes Fenster nach Anspruch 1, wobei das Starten eines eingebetteten Fensters (10) in einem aktuell angezeigten übergeordneten Fenster (20) basierend auf dem voreingestellten Bedienbefehl umfasst:
Zeichnen eines übergeordneten Fensters (20) basierend auf dem voreingestellten Bedienbefehl; und
Starten des eingebetteten Fensters (10) in dem gezeichneten übergeordneten Fenster (20).

3. Das Anzeigeverfahren für ein eingebettetes Fenster nach Anspruch 2, wobei das Zeichnen eines übergeordneten Fensters (20) basierend auf dem voreingestellten Bedienbefehl umfasst:
Ermitteln einer Fenstergröße eines zu zeichnenden übergeordneten Fensters (20) und von Platzhalterinformationen eines eingebetteten Fensters (10) im zu zeichnenden übergeordneten Fenster (20); und
Durchführen von Fensterzeichnung und Ebenenkomposition basierend auf der Fenstergröße des zu zeichnenden übergeordneten Fensters (20) und den Platzhalterinformationen des eingebetteten Fensters (10), um das gezeichnete übergeordnete Fenster (20) zu erhalten.

4. Das Anzeigeverfahren für ein eingebettetes Fenster nach Anspruch 1, wobei das Starten eines eingebetteten Fensters (10) in einem aktuell angezeigten übergeordneten Fenster (20) basierend auf dem voreingestellten Bedienbefehl umfasst:
Ermitteln eines Zielfensters, eines Fenstermodus, von Fensterabmessungen des eingebetteten Fensters (10), eines Markierungsbits des eingebetteten Fensters (10), eines Stapelmodus des eingebetteten Fensters (10) und eines Berührungsmodus des eingebetteten Fensters (10); und
Zeichnen des eingebetteten Fensters (10) basierend auf dem Zielfenster, dem Fenstermodus, den Fensterabmessungen des eingebetteten Fensters (10), dem Markierungsbit des eingebetteten Fensters (10), dem Stapelmodus des eingebetteten Fensters (10) und dem Berührungsmodus des eingebetteten Fensters (10), um das eingebettete Fenster (10) zu erhalten.

5. Verfahren zur Anzeige eines eingebetteten Fensters nach Anspruch 4, wobei das Verfahren nach dem Zeichnen des eingebetteten Fensters (10) basierend auf dem Zielfenster, dem Fenstermodus, den Fensterabmessungen des eingebetteten Fensters (10), dem Markierungsbit des eingebetteten Fensters (10), dem Stapelmodus des eingebetteten Fensters (10) und dem Berührungsmodus des eingebetteten Fensters (10) ferner umfasst:
bei Abschluss der Erstellung des Stapelmodus des eingebetteten Fensters (10), Übergeben der Stapelsteuerung an einen Host-Prozess, der dem übergeordneten Fenster (20) entspricht.

6. Verfahren zur Anzeige eines eingebetteten Fensters nach Anspruch 1, wobei das Anzeigen einer Anwendung für ein eingebettetes Fenster, die dem voreingestellten Bedienbefehl entspricht, im eingebetteten Fenster (10) umfasst:
während des Zeichnens des eingebetteten Fensters (10), Erhalten einer Fenstergröße einer Anwendung, die dem voreingestellten Bedienbefehl entspricht, sowie der konfigurierten Fensterabmessungen des eingebetteten Fensters (10);
Bestimmen eines Anzeigebereichs der Anwendung, die dem voreingestellten Bedienbefehl entspricht, basierend auf der Fenstergröße und den konfigurierten Fensterabmessungen des eingebetteten Fensters (10); und
Anzeigen der Anwendung, die dem voreingestellten Bedienbefehl entspricht, basierend auf dem Anzeigebereich.

7. Verfahren zur Anzeige eines eingebetteten Fensters nach Anspruch 1, wobei das Verfahren nach dem Anzeigen einer Anwendung für ein eingebettetes Fenster, die dem voreingestellten Bedienbefehl entspricht, im eingebetteten Fenster (10) ferner umfasst:
Erhalten eines voreingestellten Synchronisationsereignisses; und
Anpassen einer Anzeigeposition des eingebetteten Fensters (10) basierend auf dem voreingestellten Synchronisationsereignis.

8. Verfahren zur Anzeige eines eingebetteten Fensters nach Anspruch 1, wobei das Durchführen einer Interaktionsoperation basierend auf dem Bedienbefehl der Anwendung für das eingebettete Fenster, wenn ein Bedienbefehl der Anwendung für das eingebettete Fenster empfangen wird, umfasst:
Durchführen einer Schnittstellenumschaltung basierend auf dem Bedienbefehl der Anwendung für das eingebettete Fenster, wenn der Bedienbefehl der Anwendung für das eingebettete Fenster empfangen wird.

9. Verfahren zur Anzeige eines eingebetteten Fensters nach Anspruch 1, wobei das Verfahren nach dem Durchführen einer Interaktionsoperation basierend auf dem Bedienbefehl der Anwendung für das eingebettete Fenster, wenn ein Bedienbefehl der Anwendung für das eingebettete Fenster empfangen wird, ferner umfasst:
Erhalt einer Beendigungsanweisung und Rückkehr zu einer Zieloberfläche basierend auf der Beendigungsanweisung.

10. Verfahren zur Anzeige eines eingebetteten Fensters nach Anspruch 9, wobei das Erhalten einer Beendigungsanweisung und das Zurückkehren zu einer Zieloberfläche basierend auf der Beendigungsanweisung umfasst:
Entfernen eines eingebetteten Aufgabenstapels basierend auf der Beendigungsanweisung und Zurückkehren zur Zieloberfläche.

11. Vorrichtung zur Anzeige eines eingebetteten Fensters, umfassend:
ein Startmodul (901), das dazu konfiguriert ist: wenn eine voreingestellte Bedienungsanweisung erkannt wird, ein eingebettetes Fenster (10) in einem aktuell angezeigten übergeordneten Fenster (20) basierend auf der voreingestellten Bedienungsanweisung zu starten;
ein Anzeigemodul (902), das dazu konfiguriert ist, eine Anwendung für eingebettete Fenster, die der voreingestellten Bedienungsanweisung entspricht, im eingebetteten Fenster (10) anzuzeigen, wobei das eingebettete Fenster (10) und das übergeordnete Fenster (20) auf derselben Ebene oder auf benachbarten Ebenen liegen und eine im eingebetteten Fenster (10) angezeigte Anwendung mit dem übergeordneten Fenster (20) verknüpft ist; und
ein Bedienungsmodul (903), das dazu konfiguriert ist, wenn eine Bedienungsanweisung der Anwendung für eingebettete Fenster empfangen wird, eine Interaktionsoperation basierend auf der Bedienungsanweisung der Anwendung für eingebettete Fenster durchzuführen;
**dadurch gekennzeichnet, dass** das Bedienungsmodul (903) ferner dazu konfiguriert ist
zu bestimmen, ob ein Vordergrund-Fokusfenster das eingebettete Fenster ist; und
ein mit einem zu verarbeitenden Ereignis verknüpftes Vordergrund-Verarbeitungs-Tag zu löschen und das zu verarbeitende Ereignis an das übergeordnete Fenster zur Verarbeitung weiterzuleiten, wenn bestimmt wird, dass das Vordergrund-Fokusfenster das eingebettete Fenster ist.

12. Computerlesbares Speichermedium, auf dem ein Computerprogramm gespeichert ist, wobei das Computerprogramm, wenn es von einem Prozessor (210) einer Anzeigevorrichtung ausgeführt wird, den Prozessor (210) veranlasst, das Verfahren zur Anzeige eines eingebetteten Fensters nach einem der Ansprüche 1 bis 9 durchzuführen.

## Revendications

1. Procédé d'affichage de fenêtre intégrée pour un appareil d'affichage, le procédé comprenant :
lors de la détection d'une instruction d'opération prédéfinie, le démarrage (S10) d'une fenêtre intégrée (10) dans une fenêtre parente (20) actuellement affichée sur la base de l'instruction d'opération prédéfinie ;
l'affichage (S20) d'une application de fenêtre intégrée correspondant à l'instruction d'opération prédéfinie dans la fenêtre intégrée (10), dans lequel la fenêtre intégrée (10) et la fenêtre parente (20) sont au même niveau ou à des niveaux adjacents, et une application affichée dans la fenêtre intégrée (10) est associée à la fenêtre parente (20) ;
l'exécution (S30), lors de la réception d'une instruction d'opération de l'application de fenêtre intégrée, d'une opération d'interaction basée sur l'instruction d'opération de l'application de fenêtre intégrée ;
**caractérisé par** :
la détermination si une fenêtre de focus au premier plan est la fenêtre intégrée ; et
l'annulation d'une balise de traitement au premier plan associée à un événement à traiter et la redirection de l'événement à traiter vers la fenêtre parente pour traitement lorsqu'il est déterminé que la fenêtre de focus au premier plan est la fenêtre intégrée.

2. Le procédé d'affichage de fenêtre intégrée selon la revendication 1, dans lequel le démarrage d'une fenêtre intégrée (10) dans une fenêtre parente (20) actuellement affichée sur la base de l'instruction d'opération prédéfinie comprend :
le dessin d'une fenêtre parente (20) sur la base de l'instruction d'opération prédéfinie ; et
le démarrage de la fenêtre intégrée (10) dans la fenêtre parente dessinée (20).

3. Le procédé d'affichage de fenêtre intégrée selon la revendication 2, dans lequel le dessin d'une fenêtre parente (20) sur la base de l'instruction d'opération prédéfinie comprend :
l'obtention d'une taille de fenêtre d'une fenêtre parente (20) à dessiner et d'informations d'espace réservé d'une fenêtre intégrée (10) dans la fenêtre parente (20) à dessiner ; et
l'exécution du dessin de la fenêtre et de la composition des couches sur la base de la taille de la fenêtre parente (20) à dessiner et des informations d'espace réservé de la fenêtre intégrée (10), pour obtenir la fenêtre parente dessinée (20).

4. Le procédé d'affichage de fenêtre intégrée selon la revendication 1, dans lequel le démarrage d'une fenêtre intégrée (10) dans une fenêtre parente (20) actuellement affichée sur la base de l'instruction d'opération prédéfinie comprend :
l'obtention d'une fenêtre cible, d'un mode de fenêtre, des dimensions de la fenêtre intégrée (10), d'un bit de marquage de la fenêtre intégrée (10), d'un mode de pile de la fenêtre intégrée (10) et d'un mode tactile de la fenêtre intégrée (10) ; et
dessiner la fenêtre intégrée (10) en fonction de la fenêtre cible, du mode de fenêtre, des dimensions de la fenêtre intégrée (10), du bit de marquage de la fenêtre intégrée (10), du mode de pile de la fenêtre intégrée (10) et du mode tactile de la fenêtre intégrée (10), pour obtenir la fenêtre intégrée (10).

5. Procédé d'affichage de fenêtre intégrée selon la revendication 4, dans lequel, après le dessin de la fenêtre intégrée (10) en fonction de la fenêtre cible, du mode de fenêtre, des dimensions de la fenêtre intégrée (10), du bit de marquage de la fenêtre intégrée (10), du mode de pile de la fenêtre intégrée (10) et du mode tactile de la fenêtre intégrée (10), le procédé comprend en outre :
lors de l'achèvement de la création du mode de pile de la fenêtre intégrée (10), transférer le contrôle de la pile à un processus hôte correspondant à la fenêtre parente (20).

6. Procédé d'affichage de fenêtre intégrée selon la revendication 1, dans lequel l'affichage d'une application de fenêtre intégrée correspondant à l'instruction d'opération prédéfinie dans la fenêtre intégrée (10) comprend :
pendant le dessin de la fenêtre intégrée (10), obtenir une taille de fenêtre d'une application correspondant à l'instruction d'opération prédéfinie et des dimensions de fenêtre configurées de la fenêtre intégrée (10) ;
déterminer une zone d'affichage de l'application correspondant à l'instruction d'opération prédéfinie en fonction de la taille de la fenêtre et des dimensions de fenêtre configurées de la fenêtre intégrée (10) ; et
afficher l'application correspondant à l'instruction d'opération prédéfinie en fonction de la zone d'affichage.

7. Procédé d'affichage de fenêtre intégrée selon la revendication 1, dans lequel, après l'affichage d'une application de fenêtre intégrée correspondant à l'instruction d'opération prédéfinie dans la fenêtre intégrée (10), le procédé comprend en outre :
obtenir un événement de synchronisation prédéfini ; et
ajuster une position d'affichage de la fenêtre intégrée (10) en fonction de l'événement de synchronisation prédéfini.

8. Procédé d'affichage de fenêtre intégrée selon la revendication 1, dans lequel l'exécution, lors de la réception d'une instruction d'opération de l'application de fenêtre intégrée, d'une opération d'interaction basée sur l'instruction d'opération de l'application de fenêtre intégrée comprend :
effectuer une commutation d'interface en fonction de l'instruction d'opération de l'application de fenêtre intégrée lors de la réception de l'instruction d'opération de l'application de fenêtre intégrée.

9. Procédé d'affichage de fenêtre intégrée selon la revendication 1, dans lequel, après l'exécution, lors de la réception d'une instruction d'opération de l'application de fenêtre intégrée, d'une opération d'interaction basée sur l'instruction d'opération de l'application de fenêtre intégrée, le procédé comprend en outre :
obtenir une instruction de sortie, et retourner à une interface cible sur la base de l'instruction de sortie.

10. Le procédé d'affichage de fenêtre intégrée selon la revendication 9, dans lequel l'obtention d'une instruction de sortie, et le retour à une interface cible sur la base de l'instruction de sortie comprennent :
supprimer une pile de tâches intégrée sur la base de l'instruction de sortie, et retourner à l'interface cible.

11. Un appareil d'affichage de fenêtre intégrée, comprenant :
un module de démarrage (901), configuré pour : lorsqu'une instruction d'opération prédéfinie est détectée, démarrer une fenêtre intégrée (10) dans une fenêtre parente actuellement affichée (20) sur la base de l'instruction d'opération prédéfinie ;
un module d'affichage (902), configuré pour afficher une application de fenêtre intégrée correspondant à l'instruction d'opération prédéfinie dans la fenêtre intégrée (10), dans lequel la fenêtre intégrée (10) et la fenêtre parente (20) sont à une même couche ou à des couches adjacentes, et une application affichée dans la fenêtre intégrée (10) est associée à la fenêtre parente (20) ; et
un module d'opération (903), configuré pour effectuer, lorsqu'une instruction d'opération de l'application de fenêtre intégrée est reçue, une opération d'interaction sur la base de l'instruction d'opération de l'application de fenêtre intégrée ;
**caractérisé en ce que** le module d'opération (903) est en outre configuré pour
déterminer si une fenêtre de focus d'arrière-plan est la fenêtre intégrée ; et
annuler une balise de traitement d'arrière-plan associée à un événement à traiter et rediriger l'événement à traiter vers la fenêtre parente pour traitement lorsqu'il est déterminé que la fenêtre de focus d'arrière-plan est la fenêtre intégrée.

12. Un support de stockage lisible par ordinateur, dans lequel est stocké un programme informatique, dans lequel le programme informatique, lorsqu'il est exécuté par un processeur (210) d'un appareil d'affichage, amène le processeur (210) à exécuter le procédé d'affichage de fenêtre intégrée selon l'une quelconque des revendications 1 à 9.
